(19) Europäisches Patentamt / European Patent Office / Office européen des brevets

(11) **EP 1 873 488 A1**

(12) **DEMANDE DE BREVET EUROPEEN**

(43) Date de publication:
**02.01.2008 Bulletin 2008/01**

(51) Int Cl.:
*G01C 11/02* (2006.01)   *B64G 1/10* (2006.01)

(21) Numéro de dépôt: **07111083.7**

(22) Date de dépôt: **26.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **27.06.2006 FR 0652663**

(71) Demandeur: **THALES Munitronics & Microtechnics SAS 92200 Neuilly-sur-Seine (FR)**

(72) Inventeurs:
• **Pailharey, Eric 06580, PEGOMAS (FR)**
• **Palmade, Jean-Luc 83440, FAYENCE (FR)**

(74) Mandataire: **Esselin, Sophie et al Marks & Clerk France 31-33 Avenue Aristide Briand 94117 Arcueil Cedex (FR)**

(54) **Procédé et système d'observation de la terre par satellite**

(57) L'invention concerne un procédé d'observation de la terre à partir d'un satellite comprenant un appareil de prise de vues embarqué dans un satellite. Ce procédé prévoit une rotation de l'appareil de prise de vues lors de son déplacement au dessus de la zone observée de façon à ce qu'il soit constamment orienté vers une zone (ZU.1 à ZU.4) présentant un minimum d'éblouissement dû à une réflexion de la lumière du soleil.
Application: Observations par satellite

Fig. 4

EP 1 873 488 A1

**Description**

L'invention concerne un procédé d'observation de la terre à partir d'un satellite. Elle concerne également un système permettant de mettre en oeuvre un tel procédé et notamment un système d'observation ou de prise de vues à partir d'un satellite héliosynchrone.

L'observation de la terre et notamment des océans peut poser des problèmes dans certaines conditions d'observations. En effet, il peut se produire un phénomène d'éblouissement de l'image observée en raison de réflexions sur la surface de la mer ce qui est notamment le cas sur de grandes étendues d'eau tels que les océans. En terminologie anglo-saxonne, ce phénomène est appelé "Sun Glint".

Ce problème est critique dans le cas d'un satellite d'observation qui est prévu pour passer à l'équateur à chaque orbite à la même heure solaire (satellites héliosynchrone).

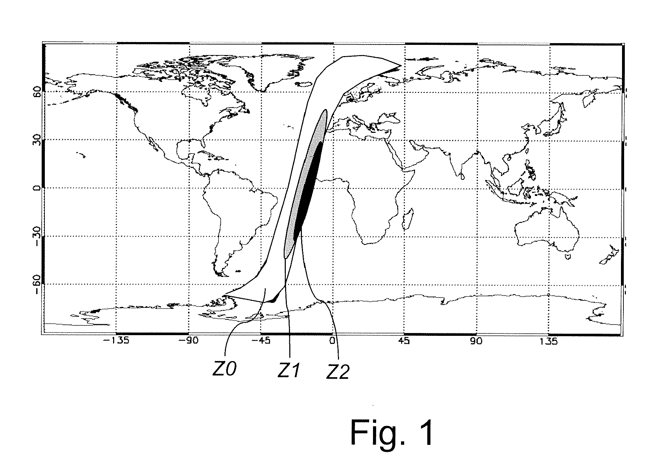

Ce problème est illustré de façon schématique par la figure 1 où l'on voit une "passe" d'observation de la terre, appelée également "fauchée", à partir d'un satellite. Lors d'une fauchée, la zone ZO sera observée et éventuellement filmée. Sur cette figure la zone Z2 qui donne lieu à une réflexion intense a été noircie et une zone Z1 est également partiellement éblouie. Comme on peut le voir sur cette figure, au niveau de l'équateur, le champ d'observation non ébloui est relativement réduit tandis que vers les pôles les champs d'observation sont plus larges. On peut estimer que dans l'ensemble de la zone d'observation 70% des observations sont difficilement ou pas du tout exploitables.

On remarque donc que l'éblouissement de l'observation due aux réflexions de la lumière solaire évolue avec la latitude. Elle est très marquée à l'équateur et plus atténuée pour des latitudes plus hautes, ou plus basses.

La solution la plus directe est de réaliser un instrument « large champ » qui couvre l'ensemble des zones utiles et inutiles et à ne conserver que les données utiles à la latitude concernée.

Cette solution présente l'inconvénient de nécessiter un dispositif d'observation qui n'est pas utilisé entièrement dans certaines zones d'observation et cette solution nécessite de traiter les zones d'observation non utilisable par suite d'éblouissement. Il en résulte donc un matériel qui est mal utilisé, surdimensionné et des temps de traitement inutiles.

L'invention a pour objet de résoudre ces problèmes.

L'invention concerne donc un procédé d'observation de la terre à partir d'un satellite comprenant un appareil de prise de vues embarqué dans le satellite. Ce procédé prévoit une rotation de l'appareil de prise de vues lors de son déplacement au dessus de la zone terrestre observée de façon à ce qu'il soit constamment orienté vers une zone présentant un minimum d'éblouissement dû à une réflexion de la lumière du soleil.

C'est ainsi que lors d'un déplacement transversal par rapport aux lignes de latitudes terrestres, la direction d'observation de l'appareil de prise de vue est orientée quasiment perpendiculairement par rapport au plan de la surface terrestre observée lorsque le satellite est au dessus de l'un des pôles, puis l'appareil de prise de vues est progressivement incliné par rapport au plan de la surface terrestre observée pour adoptée une direction d'observation oblique au niveau de l'équateur. L'appareil de prise de vues est ensuite tourné en sens inverse pour se retrouver selon une direction d'observation perpendiculaire au plan de la surface terrestre au dessus de l'autre pôle, et ainsi de suite.

Dans un tel procédé, on prévoira avantageusement que tout ou partie de l'appareil de prise de vues est tourné en fonction du mouvement du soleil.

On pourra prévoir de préférence que l'angle de champ de l'appareil de prise de vues est compris entre 30 degrés et 40 degrés.

Par ailleurs, on pourra également prévoir que l'inclinaison de la direction d'observation de l'appareil de prise de vues est donné par la formule suivante en fonction de la position du satellite par rapport à la terre:

$$y = Ax^2 + Bx + C,$$

Dans cette formule, x représente l'inclinaison de l'axe optique de l'appareil de prise de vue par rapport à la normale à la surface de la terre, y représente la position du satellite en latitude terrestre, et les coefficients A, B et C représentent des paramètres qui sont fonction du calendrier et de l'heure locale du satellite (par exemple à l'équinoxe pour un satellite à 10h00, A = 0,0076, B = 0,0602 et C= 19,452).

Dans ces conditions, on peut estimer que selon une forme préférentielle du procédé de l'invention, l'inclinaison de la direction d'observation de l'appareil de prise de vues, lorsque le satellite est au dessus de l'équateur, est compris entre 30 degrés et 40 degrés.

L'invention concerne également un système d'observation de la terre à partir d'un satellite appliquant le procédé ainsi décrit. Pour cela, il comporte, outre l'appareil de prise de vues, un actuateur (ROT) de rotation de l'appareil de prise de vue commandé par un circuit de commande de rotation. Un dispositif de détection détecte la position du satellite et fournit une information caractéristique de la position du soleil à une unité de contrôle. Celle-ci calcule une orientation de la direction d'observation de l'appareil de prise de vues en fonction de la position du soleil et fournit une information d'orientation de l'appareil de prise de vues au circuit de commande.

Les différents objets et caractéristiques de l'invention apparaîtront plus clairement dans la description qui va suivre et dans les figures annexées qui représentent:

- la figure 1, une fauchée d'observation illustrant le problème que résout l'invention et déjà décrite précédemment,

- la figure 2, un schéma illustrant une observation selon une technique connue,
- la figure 3, un schéma illustrant une observation selon l'invention,
- la figure 4, différentes étapes d'observations selon l'invention,
- la figure 5, un diagramme de fonctionnement du procédé selon l'invention,
- la figure 6, un exemple de réalisation d'un système de commande d'un appareil de prise de vues permettant d'éviter les zones d'éblouissement.

Selon la position du soleil par rapport à la terre, la lumière solaire peut dans certains cas être réfléchie par la surface de la mer, et notamment par les grande étendues d'eau, vers un satellite d'observation. Lorsqu'un appareil d'observation tel qu'un appareil de prise de vues observe la terre comme cela a été décrit précédemment, il peut donc être en partie ébloui par cette réflexion.

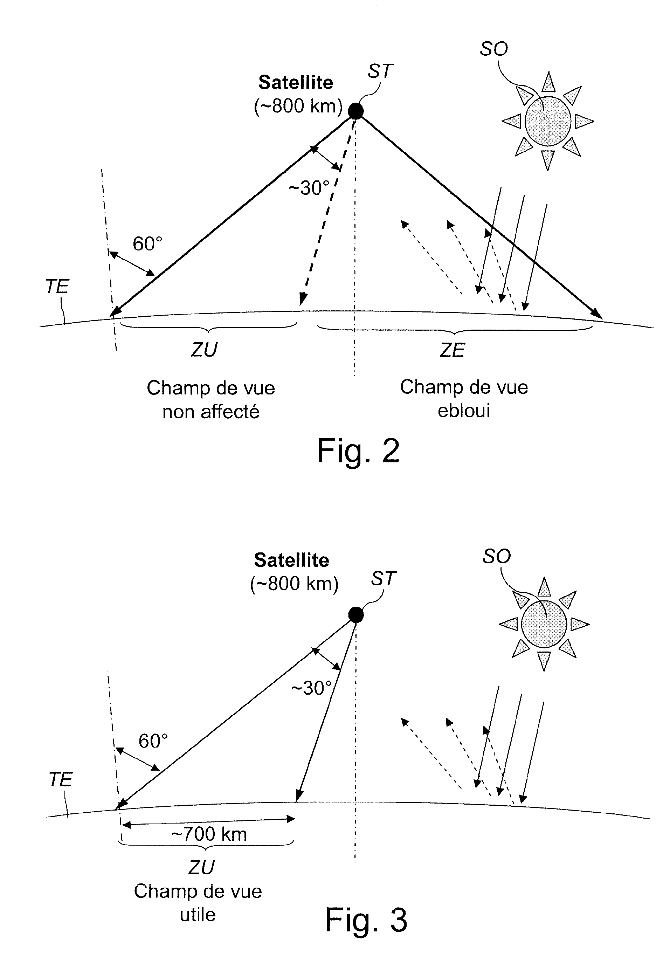

La figure 2 illustre ce phénomène. La lumière émise par le soleil est réfléchie par la zone ZE de la terre. Selon la position du satellite par rapport au soleil, il reçoit la lumière réfléchie et ne peut pas faire d'observation de cette zone en raison de l'éblouissement dû à la lumière réfléchie. Son champ de vue non affecté par cet éblouissement est donc limité à la zone ZU.

Selon l'invention on tente donc de limiter le champ d'observation à la zone utile comme cela est illustré par la figure 3.

De façon pratique, on peut estimer que pour un satellite situé à 800 kilomètres d'altitude par exemple, l'ouverture de l'angle d'observation de cette zone utile ZU est sensiblement de 30° au dessus de l'équateur. Cet angle permet d'observer un champ utile d'environ 700 kilomètres.

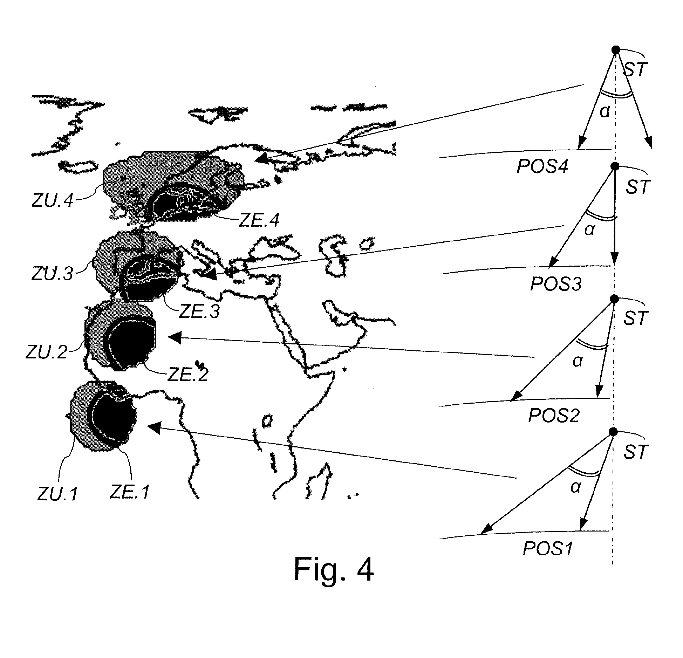

La figure 4 illustre le procédé d'observation de l'invention selon lequel on oriente constamment l'appareil de prise de vue du satellite vers la zone observée ne présentant pas d'éblouissement résultant de la réflexion de la lumière du soleil.

A titre d'exemple, lorsque le soleil se déplace transversalement aux lignes de latitudes terrestres, il passe par les quatre positions successives POS1 à POS4.

En position POS1 la zone ZE.1, représentée en noir, qui donne lieu à éblouissement de l'appareil de prise de vue est importante. Par contre la zone ZU.1, représentée en gris, dont la vision est acceptable à partir du satellite est de dimension réduite dans la direction parallèle aux lignes de latitudes. L'ouverture de l'angle d'observation $\alpha$ est supérieur à la dimension de la zone ZU.1 mais est inférieure à la dimension de l'ensemble des zones ZU.1 et ZE.1.

En position POS2 du satellite, l'appareil de prise de vues est tourné de façon que sa direction d'observation soit ramenée vers la normale du satellite par rapport à la surface de la terre. La zone observée est la zone ZU.2. L'angle d'ouverture $\alpha$ de prise de vues est gardé constant. Avantageusement, cet angle d'ouverture est compris entre 30 et 40 degrés en fonction de l'état de surface de la mer et de préférence une valeur voisine de 37 degrés.

En position POS3 du satellite, l'appareil de prise de vues est à nouveau tourné pour ramener sa direction vers la normale à la surface de la terre et la zone observée est la zone ZU.3.

En position POS4 du satellite, la zone observée est proche du pôle nord (sur la figure 4), l'appareil de prise de vues est amené selon une direction sensiblement normale à la surface de la terre.

Selon ce procédé, l'appareil de prise de vues a été constamment orienté vers les zones ZU.1 à ZU.4 ne présentant pas d'éblouissement dû à une réflexion directe de la lumière du soleil. Les zones observées par l'appareil de prise de vues sont donc des zones exploitables. L'appareil de prise de vues n'a pas à prendre des vues de zones, telle que ZE.1, qu'on ne pourra pas exploiter.

L'appareil de prise peut être utilisé de façon optimale en ce qui concerne son champ de vision et/ou être dimensionné pour un champ de vue limité.

Par ailleurs, le satellite d'observation connaît le mouvement du soleil et il est connu d'avoir, sur des satellites, des capteurs qui suivent le déplacement du soleil. L'invention utilise un tel système de suivi du mouvement du soleil pour commander la rotation de l'appareil de prise de vues.

Avantageusement, le mouvement de rotation de l'appareil de prise vue se fait selon la formule suivante:

$$y = Ax^2 + Bx + C,$$

Dans laquelle:

- x représente l'angle que forme l'axe optique de l'appareil de prise de vue avec la normale à la surface de la terre, l'axe optique de l'appareil de prise de vue étant l'axe de la direction de vision de cet appareil,
- y représente la position en latitude du satellite,
- A, B et C représentent des paramètres variants en fonction du calendrier et de l'heure locale du satellite (par exemple à l'équinoxe pour un satellite à 10h00, A = 0,0076, B = 0,0602 et C= 19,452).

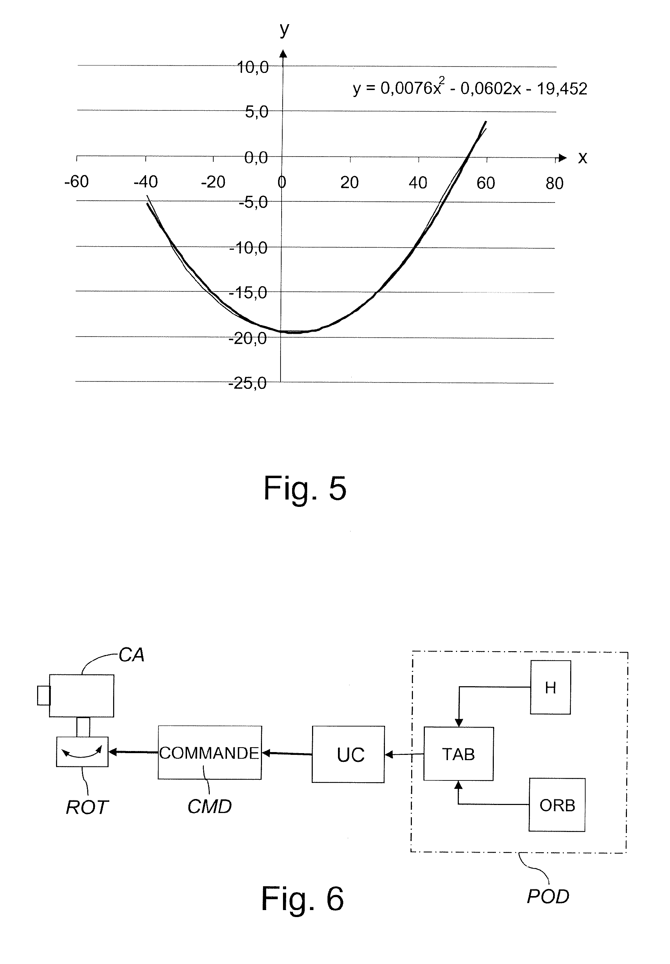

La figure 5 représente une courbe qui illustre cette fonction d'orientation de l'appareil de prise de vues en fonction de la position du satellite par rapport à la position du soleil.

La figure 6 représente un diagramme de liaisons de circuits permettant de commander le mouvement de l'appareil de prise de vues tel qu'il a été décrit précédemment.

Ce système comporte donc un appareil de prise de vues CA. Son orientation peut être commandée par un actuateur ROT qui est commandé par un circuit de commande CMD.

Le satellite connaît sa position sur l'orbite avec précision. En fonction du calendrier, la position du soleil est connue avec précision.

Sur la figure 6, le dispositif ORB fournit des informations sur l'orbite du satellite.

Une horloge interne H fournit à chaque instant la date et l'heure.

Ces informations (orbite et indications horaires) permettent d'adresser une table mémoire TAB.

La corrélation des informations:

- position du satellite sur l'orbite
- et position du soleil en fonction du calendrier,

permet de commander le mouvement du moteur en fonction d'une table pré-établie. L'information de direction calculée est transmise au circuit de commande CMD.

## Revendications

1. Procédé d'observation de la terre à partir d'un satellite comprenant un appareil de prise de vues (CA) embarqué dans un satellite, **caractérisé en ce qu'**il prévoit une rotation de l'appareil de prise de vues (CA) lors de son déplacement au dessus de la zone (Z0) observée de façon à ce qu'il soit constamment orienté vers une zone présentant un minimum d'éblouissement dû à une réflexion de la lumière du soleil et **caractérisé en ce que** lors d'un déplacement transverse par rapport aux lignes de latitudes terrestres, la direction d'observation de l'appareil de prise de vue est orientée quasiment perpendiculairement par rapport au plan de la surface terrestre observée lorsque le satellite est au dessus de l'un des pôles, puis l'appareil de prise de vues est progressivement incliné par rapport au plan de la surface terrestre observée pour adoptée une direction d'observation oblique au niveau de l'équateur, puis l'appareil de prise de vues est tourné en sens inverse pour se retrouver selon une direction d'observation perpendiculaire au plan de la surface terrestre au dessus de l'autre pôle, et ainsi de suite.

2. Procédé d'observation selon la revendication 1, **caractérisé en ce que** tout ou partie de l'appareil de prise de vues est tourné en fonction du mouvement du soleil.

3. Procédé d'observation selon la revendication 2, **caractérisé en ce que** l'angle de champ de l'appareil de prise de vues est compris entre 30 degrés et 40 degrés en fonction de l'état de surface de la mer.

4. Procédé d'observation selon la revendication 2, **caractérisé en ce que** l'inclinaison de la direction d'observation de l'appareil de prise de vues est donné par la formule suivante en fonction de la position du satellite par rapport à la terre: $y = Ax^2 + Bx + C$, dans laquelle:

   - x représente l'angle que forme l'axe optique de l'appareil de prise de vues avec la normale à la surface de la terre,
   - y représente la position en latitude terrestre du satellite,
   - A, B et C représentent des paramètres variants en fonction du calendrier et de l'heure locale du satellite.

5. Procédé d'observation selon la revendication 4, **caractérisé en ce que** l'inclinaison de la direction d'observation de l'appareil de prise de vues, lorsque le satellite est au dessus de l'équateur, est compris entre 30 degrés et 40. degrés.

6. Système d'observation de la terre à partir d'un satellite appliquant le procédé selon l'une quelconque des revendications précédentes **caractérisé en ce qu'**il comporte un appareil de prise de vue, un actuateur (ROT) de rotation de l'appareil de prise de vue (CA) commandé par un circuit de commande de rotation (CMD), au moins un dispositif de détection (POD) de la position du satellite fournissant une information caractéristique de la position du soleil à une unité de contrôle (UC), laquelle calcule une orientation de la direction d'observation de l'appareil de prise de vues en fonction de la position du soleil et fournit une information d'orientation au circuit de commande (CMD).

Z0    Z1    Z2

# Fig. 1

**Satellite**
(~800 km) *ST*

*SO*

~30°

60°

*TE*

*ZU*

*ZE*

Champ de vue
non affecté

Champ de vue
ebloui

# Fig. 2

**Satellite**
(~800 km) *ST*

*SO*

~30°

60°

*TE*

~700 km

*ZU*
Champ de vue
utile

# Fig. 3

Fig. 4

$$y = 0{,}0076x^2 - 0{,}0602x - 19{,}452$$

**Fig. 5**

**Fig. 6**

**Office européen des brevets**

**RAPPORT DE RECHERCHE EUROPEENNE**

Numéro de la demande

EP 07 11 1083

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | MITCHELL B G ET AL: "Satellite ocean color data for studying oceanic biogeochemical cycles" PROCEEDINGS OF THE NATIONAL TELESYSTEMS CONFERENCE. ATLANTA, MARCH 26, vol. VOL. 1, 26 mars 1991 (1991-03-26), pages 283-287, XP010047041 ISBN: 0-7803-0062-9 * page 283, colonne de gauche, alinéas 1,3 * * page 285, colonne de gauche, alinéa 7 - colonne de droite, alinéa 1 * ----- | 1-6 | INV. G01C11/02 B64G1/10 |
| X | FUKUSHIMA H ET AL: "Vicarious Calibration of ADEOS-2 GLI Visible to Shortwave Infrared Bands Using Global Datasets" IEEE TRANSACTIONS ON GEOSCIENCE AND REMOTE SENSING, IEEE SERVICE CENTER, PISCATAWAY, NJ, US, vol. 43, no. 7, juillet 2005 (2005-07), pages 1571-1584, XP011135557 ISSN: 0196-2892 * page 1572, colonne de gauche, alinéa 3 - colonne de droite, alinéa 1 * * page 1576, colonne de gauche, alinéa 1 - colonne de droite, alinéa 1 * * tableau 1 * ----- | 1-6 | |
| X | EP 1 048 928 A (DEUTSCH ZENTR LUFT & RAUMFAHRT [DE]) 2 novembre 2000 (2000-11-02) * page 2, alinéas 1,2 * * page 3, alinéa 15 - alinéa 17 * * page 3, alinéa 19 * * figures 1,2 * ----- -/-- | 1 | DOMAINES TECHNIQUES RECHERCHES (IPC) G01C B64G H04N |

Le présent rapport a été établi pour toutes les revendications

| Lieu de la recherche | Date d'achèvement de la recherche | Examinateur |
|---|---|---|
| La Haye | 1 octobre 2007 | Yosri, Samir |

**Office européen
des brevets**

## RAPPORT DE RECHERCHE EUROPEENNE

Numéro de la demande

EP 07 11 1083

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| A | EP 0 881 554 A2 (LORAL SPACE SYSTEMS INC [US] LORAL SPACE SYSTEMS INC) 2 décembre 1998 (1998-12-02) * le document en entier * ----- | 1-6 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 1 octobre 2007 | Yosri, Samir |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 11 1083

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2007

| Document brevet cité au rapport de recherche | | Date de publication | Membre(s) de la famille de brevet(s) | | Date de publication |
|---|---|---|---|---|---|
| EP 1048928 | A | 02-11-2000 | AUCUN | | |
| EP 0881554 | A2 | 02-12-1998 | JP | 11020797 A | 26-01-1999 |
| | | | US | 5978716 A | 02-11-1999 |

Pour tout renseignement concernant cette annexe : voir Journal Officiel de l'Office européen des brevets, No.12/82